# EUROPEAN PATENT APPLICATION

(11) **EP 0 702 201 A1**
(43) Date of publication of application: **20.03.1996**
(21) Application number: 95202246.5
(22) Date of filing: 21.08.1995
(51) Int. Cl.: F28D 1/03, F16L 13/08

(54) **Laminated heat exchanger core with interior opening feed pipe**

(30) Priority: 14.09.1994 US 305623
(71) Applicant: GENERAL MOTORS CORPORATION, Detroit Michigan 48202 (US)
(72) Inventor: Beddome, David Wilson, Amherst, New York 14228 (US); Janzen, Clifford Bruce, Niagara Falls, New York 14301 (US); Carson, Thomas James, Lockport, New York 14094 (US); MacPhee, David Carlton, Amherst, New York 14228 (US)
(74) Representative: Denton, Michael John

(57) **Abstract**

An improved method for securing a long inlet feed pipe (22) deep within the manifold tank (16) of a laminated, U-flow, multi-pass type of evaporator (10). The end of the pipe (22) is formed with a continuous bead (28) and a pair of short, sharp bumps (30) spaced therefrom. A funnel shaped opening (32) through the blocking web (20) that defines the first flow pass has a greatest diameter (D2) significantly larger than the pipe bead (28), and a smallest diameter equal to the basic diameter (D) of the pipe (22). The total height (H) of the conical wall (32) is less than the axial space (X) between the pipe bead (28) and bumps (30). When the pipe (22) is inserted, it is directed in and through the conical wall (32), with the bumps (30) snapping through to create a sensed indication of proper insertion. In the braze furnace, the pipe bead (28) sinks down into and contacts the conical wall (32) to create a multi level, complete braze seam (36, 38).

## Description

This invention relates to laminated heat exchanger cores in general, and specifically to an improved method for installing a long feed pipe deep within such a core at a remote, inaccessible location.

### Background of the Invention

Automotive air conditioning systems typically include a laminated or plate type heat exchanger core made up of generally planar, stamped aluminum tube plates that are stacked and then brazed together. The tube plates are brazed together in pairs in a front-to-front orientation, creating thin, flat refrigerant flow spaces. To feed fluid in and out of the tubes, integral, open cups are stamped into the abutted plate pairs, protruding from the back thereof in opposite directions. When the core is stacked and bundled, the pairs create two manifold tanks extending the length of the core. The manifold tanks may be located at the top and bottom of the core, in which case the refrigerant flow is top to bottom, or they may be side to side, in which case the refrigerant flows in a U-shaped pattern.

With either tank configuration, refrigerant must be fed into one tank and withdrawn from the other. In the simplest, so called one pass system, refrigerant is inlet into one end of one tank, and withdrawn from the other tank at the opposite end of the core. In the one pass system, the flow through all tubes, U-shaped or straight, is in the same direction. A simple multi-pass flow arrangement can be created by staggering blocking webs throughout the tanks, thereby shifting the flow direction at each obstruction, in which case the outlet can even be from the same tank as the inlet, but still at the opposite end of the core. When the inlet and outlet to the manifold tanks are at opposite ends of the cores, the inlet and outlet pipes can both be very short, and their interface with the core is clearly visible. Therefore, it is relatively simple to assure that the brasing or welding connection is complete.

In some multi-pass evaporator core applications, because of packaging constraints, it is necessary or desirable to have the inlet and outlet at the same end of the core. In such case, the first pass is created at a point remote from the first end of the core, generally all the way at the opposite end of the core. Inlet fluid works its way back from the remote first pass to a final pass located at the first end of the core. This is accomplished through the use of a long inlet pipe that is inserted deep into one manifold tank and secured in fluid tight fashion through a tank blocking web near the opposite end of the core. Because the structural interface between the end of the long inlet pipe and the core is remote and non-visible, a number of processing problems are encountered. The installer is working blind, and cannot see whether or when the remote end of the inlet pipe has been properly seated. Furthermore, the seal at the structural interface has to be created by a passive joining process, generally furnace brazing, in which the securement occurs without active participation by the assembler. In furnace brazing, the core elements are assembled and held mechanically together while a clad layer of braze material is melted in a furnace. The melted material is drawn by capillary action automatically into the gaps between interfaced parts, and hardens later. The quality of the braze seams depends how accurately those interfaces can be held, and on how thoroughly the melted film of braze material is drawn in and held, both of which are essentially invisible to the process operator.

Published patents showing long, remote inlet feed pipes in a laminated evaporator core are generally sketchy as to the details of the inlet pipe installation or securement. Usually, the end of the pipe is just illustrated as passing closely through a simple hole in a blocking web. The process by which positive pipe seating would be sensed, or a complete braze seam assured, is not illustrated.

### Summary of the Invention

A method for assembling a heat exchanger core in accordance with the present invention is characterised by the features specified in claim 1.

The invention provides a method for securing an elongated inlet pipe in a multi-pass laminated core of the type described above which provides an easily sensed signal of proper seating for the installer, and which at the same time assures a complete braze seam and seal.

In the embodiment disclosed, the elongated inlet pipe has a continuous exterior bead of enlarged diameter formed thereon axially spaced from, but near, the inner end. The bead is preferably formed by an axial compression process that gives it a uniform, generally semi-spherical cross section. Also, a pair of short, convex bumps are preferably formed on the feed pipe between the bead and the pipe end.

In the core, the blocking web that defines the first, remote core pass has a funnel shaped opening therethrough that is aligned with the pipe. It has a continuous ccnical wall with a largest diameter greater than the bead diameter and a smallest diameter in the form or a short sleeve that is substantially equal to the basic diameter of the pipe. Since the stock from which the plates are stamped is clad with a layer of braze material, the surface of the conical wall is similarly clad.

When the installer pushes the inlet pipe down into the manifold tank, the larger diameter conical wall acts as a lead in to direct the end of the pipe into the smaller diameter sleeve. When pressed further, the small bumps pop through the sleeve, and the bead hits the conical wall. The installer can easily sense the seating of the bead, and the sleeve is trapped between the bead and the bumps, keeping the pipe in place. During brazing, the same structure acts to assure a proper braze seam. The core is set on end, so that the conical wall forms a well around the bead. In addition, gravity keeps the bead sitting against the conical wall, the relative size of which assures a pair of wedge shaped interfaces continuously around both sides of the bead. Furthermore, there is a thin chamber effectively formed all the way round the lower side of the bead, between it and the sleeve. Melted braze material runs down and into the well, and is drawn into the wedge shaped interfaces, filling them and the thin chamber. A good, continuous, multi level seam and seal around the bead is thereby created.

The present invention will now be described, by way of example, with reference to the accompanying drawings, in which:
Figure 1 is a top view of a completed evaporator partially broken away to show where the inlet pipe runs;
Figure 2 is a sectional view taken along the line 2-2 of Figure 1;
Figure 3 is a sectional view of the core taken along the line 3-3 on Figure 2, showing the inlet pipe before it is seated;
Figure 4 is a view like Figure 3, after the inlet pipe is seated, before brazing;
Figure 5 is a view of just the end of the pipe after the core has been inverted, but before being brazed;
Figure 6 is an enlargement of the encircled portion of Figure 5;
Figure 7 is a view like Figure 5, after the brasing operation has been completed.

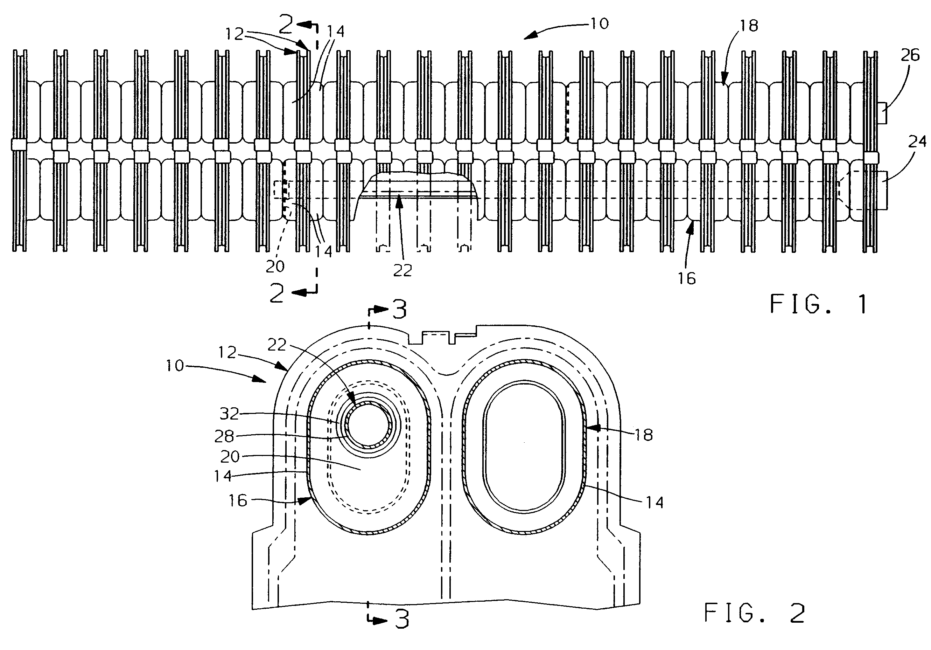

Referring first to Figures 1 and 2, a laminated evaporator core, indicated generally at 10, comprises a series of U-shaped flow tubes, each made up of an abutted pair of oppositely facing, stamped aluminum tube plates, two of which are indicated generally at 12. Both surfaces of each plate 12 are clad with a braze material, such as aluminum-silicon, which melts in a braze furnace to create a film that can be drawn by capillary action into accurately maintained, thin interfaces between abutting components. Each plate 12 has a pair of stamped cups 14 which, when abutted with the cups 14 of the adjacent plates 12, forms a pair of elongated manifold tanks, an inlet tank 16 and outlet tank 18. Some plate cups 14 would be blocked with webs staggered so as to create a multi-pass flow pattern. One such web 20 is indicated, which is located at a point deep within the inlet tank 16, remote from the end thereof, so as to define an initial flow pass. Unlike the other webs, web 20 has an opening through it, described in detail below. An elongated inlet pipe, indicated generally at 22, feeds refrigerant to the remote first pass of the inlet tank 16, behind the web 20, from an exterior end 24. Feeding refrigerant deep into the inlet tank 16 allows refrigerant to exit the outlet tank 18 at 26, on the same end of the core 10.

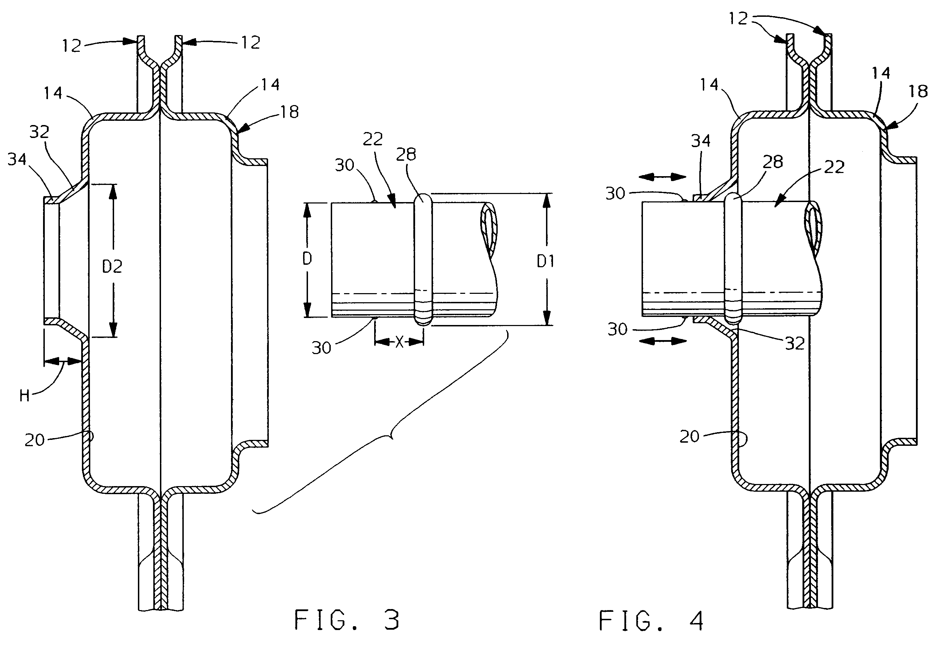

Referring next to Figure 3, the structure that secures inlet pipe 22 to web 20 is illustrated in detail. Inlet pipe 22 is formed near its inner end so to create a continuous bead 28, which has a diameter D1 larger than the basic diameter D of pipe 22. D1 is not a great deal larger than D, just over 1 mm larger in the embodiment disclosed. Bead 28 is formed by supporting the end of pipe 22 closely in a die and then axially compressing the unsupported length toward the die. Then, one or more bumps 30 are stamped into the surface of pipe 22, spaced axially away from bead 28 by a distance X. Bumps 30 are deliberately made short, but sharp, extending only a fraction of a millimeter above the outer surface of pipe 22. Web 20 is stamped with a basically funnel shaped opening comprising a continuous, converging conical wall 32, which has an angle of approximately sixty degrees relative to the axis of pipe 22, and ends in a short cylindrical sleeve 34. The greatest diameter D2 of wall 32 is significantly larger than D1, enough so that conical wall 32 is significantly longer, in the axial direction, than the axial thickness of bead 28. The diameter of short sleeve 34 is equal to the basic diameter D of pipe 22. The total axial height H of wall 32 and sleeve 34 together is deliberately made significantly less than X, for a reason described below. These relative dimensions interact in a fashion described next.

Referring next to Figure 4, the first step in the installation of pipe 22 is illustrated. First, of course, as with any core 10, the plates 12 are bundled or stacked together. This creates the basic configuration of the tanks 16 and 18, although the parts are not yet secured together. Pipe 22 is then installed by inserting its inner end lengthwise into inlet tank 16 and pushing it as far as it will go. Given its length, the end of pipe 22 can easily become cocked and off center relative to sleeve 34, but it will eventually, with repeated attempts, find the larger conical wall 32, which will funnel it toward the sleeve 34. Given its height and lead in angle, and the fact that it is thinned in the stamping process, there is some resilience in the conical wall 32 at its juncture with sleeve 34, enough to let it pass the short bumps 30 through the sleeve 34. Some resistance to insertion will be sensed by the installer before "snap through," but not enough to deform the sleeve 34, since the bumps 30 are so short. Finally, the bead 28 hits the conical wall 32. This provides a very obviously sensed positive stop, since the bead 28, though not much larger in diameter than pipe 22, is continuous, and therefore cannot be pushed through sleeve 34, as can the shorter, discrete bumps 30. As seen in Figure 4, the pipe 22 becomes trapped by the bumps 30, which cannot be pulled back past the sharp edge of sleeve 34 nearly as easily as they passed through the sloped conical wall 32. Pipe 22 is not retained solidly and rattle free at this point in the process. In fact, some rattle is deliberately built in by making X significantly larger than H. The installer will thereby be able to shift pipe 22 back and forth in the direction of the arrows, alternately hitting the bead 28 and the bumps 30, and sense that pipe 22 has in fact reached the home position. Solid, sealed attachment of pipe 22 is achieved at the next step in the process.

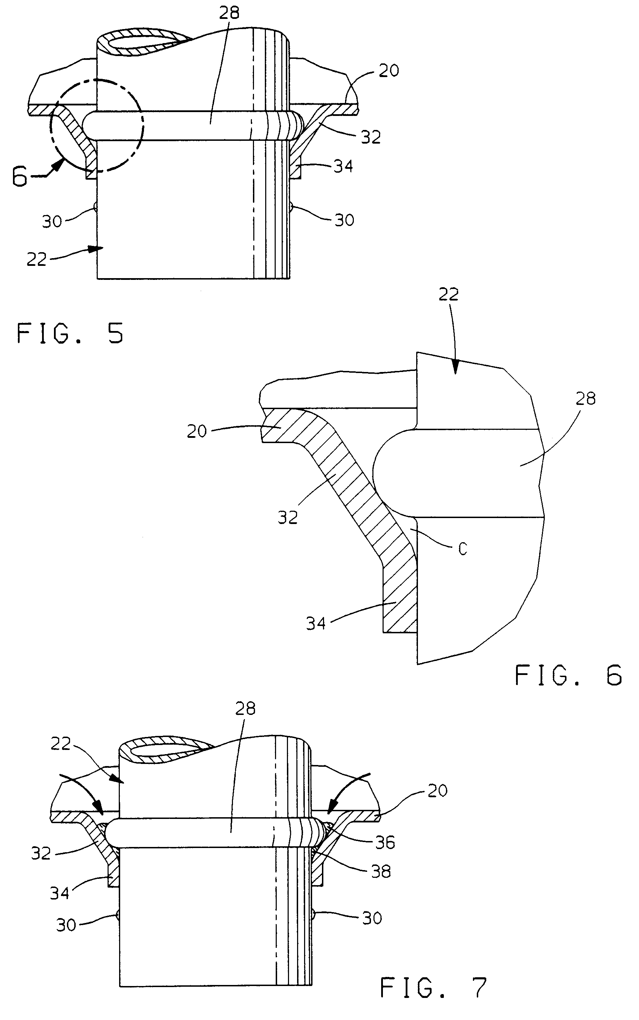

Referring next to Figures 5 through 7, once core 10 has been stacked and bundled as described above, it is set on end and placed in a braze furnace. During pre-braze handling, pipe 22 is latched securely enough to web 20 to prevent it from falling out. In the braze position, pipe 22 is vertical, so that it's weight would tend to push it down and keep bead 28 against conical wall 32. A light downward tap from the installer on the exposed end of pipe 22 would be enough to assure the seating of bead 28 as illustrated. Because of the relative diameter of wall 32 described above, bead 28 makes continuous contact all the way round, sunken below the surface of web 20, surrounded, in effect, by a concave well. The semi spherical cross sectional shape of bead 28 creates a pair of continuous, surrounding wedge shaped interfaces in contact with wall 32, one of which opens upwardly. Because the diameter of bead 28 is close to the diameter of pipe 22 and sleeve 34, the underside of bead 28 creates a thin chamber of triangular cross section, labeled C in Figure 6, in conjunction with the lower part of conical wall 32 and sleeve 34. The chamber C contains two wedge shaped interfaces, one opening upwardly, and one opening downwardly toward sleeve 34. Because both sides of every plate 12 are clad with a braze layer, so is the surface of web 20, as well as conical wall 32 and sleeve 34. As shown by the arrows in Figure 7, when the bundled core 10 is heated to temperature in the furnace, melted braze material can run down into the surrounding well, puddling around the upper surface of bead 28. Any that leaks past bead 28 and into chamber C will be drawn up to an extent, by capillary action. In addition, some will be drawn downwardly toward the interface between the outer surface of pipe 22 and sleeve 34, both by gravity and by capillary action. In fact, it is probable that the entire thin chamber C would fill with and retain melted braze material, since its size and shape are ideal for the physical process that occurs. When core 10 is cooled, therefore, a pair of braze seams 36 and 38 harden and form, which provide three levels of circumferentially continuous seal between pipe bead 28, conical wall 32, and sleeve 32. Fluid exiting the end of pipe 32 is thereby confined to the downstream side of web 20, and kept well within the confines of the first flow pass. In addition, the seams 36 and 38 provide a solid, rigid connection to web 20. Simultaneously, of course, the plates 12 and other components of core 10 become fused together.

In conclusion, a high degree of cooperation occurs among the basically simple structures of pipe bead 28, bumps 30, conical wall 32 and sleeve 34. A positive, easily sensed, self locating action occurs when pipe 22 is initially inserted. The same structure thereafter assures that a complete, multi level braze seam is achieved. Variations in the disclosed embodiment could be made. It would be possible to form a circumferentially continuous bead by a different process, such as stamping or turning. A differently formed bead could have a different cross sectional shape, so long as it had a generally annular configuration with a constant outer diameter, which would be suitable to contact the conical wall 32 evenly and continuously. Such a bead could even have a conical cross section that more closely matched the conical wall 32. However, the semi spherical cross section of bead 28, which naturally occurs when it is formed, lends itself well to the brazing process, as described above. The largest diameter of conical wall 32 could be made even larger than shown, so as to provide a larger funnel to catch the end of pipe 22 and aid the blind insertion thereof. In that case, the slope of wall 32 would be steeper, unless its total height H were made proportionally greater, and H cannot be made too great without over thinning the plate material. The contact configuration between wall 32 and bead 28, once seated, would be basically the same regardless. If the core 10 were to be handled in such a way that pipe 22 was not subject to falling out, and if the conical wall 32 was wide enough to provide a very positive lead in, then the seating of bead 28 alone, without the snap in feature of the bumps 30, could be sufficient to assure installation. The bumps 30 are relatively easy to form, however, and provide both an indication of proper installation and pre brazing retention for pipe 22. Sleeve 34 could be made significantly shorter, even to the point where conical wall 32 terminated just in an edge of diameter D. A sleeve like 34 provides extra support for the end of pipe 22, however, as well as added assurance that melted braze material is retained to form the lower braze seam 38. Therefore, it will be understood that it is not intended to limit the invention to just the embodiment disclosed.

## Claims

1. For use with a laminated heat exchanger core (10) of the type having a plurality of abutted tube plate (12) pairs, each with protruding integral cups (14) that provide manifold tanks (16,18) extending end to end of said core (10), and an elongated feed pipe (22), the inner end of which opens into the interior of one of said manifold tanks (16) at a point remote from an end of said core (10), a method of securing said pipe (22) to said core (10), comprising the steps of,
forming a continuous exterior bead (28) on said feed pipe (22) at a point axially spaced from the inner end thereof, said bead (28) having a generally annular surface with a defined diameter (D1),
providing a solid web (20) closing one of said cups (14) and located substantially at said remote location, said web (20) having a funnel shaped opening therethrough comprising a continuous conical wall (32) with a largest diameter (D2) greater than said bead diameter (D1) and a smallest diameter substantially equal to the basic diameter (D) of said pipe (22),
cladding at least the surface of said conical wall (32) with a layer of braze material,
inserting said feed pipe (22) lengthwise into said manifold tank (16) until its inner end is guided through said conical wall (32),
inverting said core (10) so that said bead (28) is maintained in weighted contact with said web opening conical wall (32), thereby forming a well surrounding said bead (28) with a continuous area of contact between said bead (28) and conical wall (32), and,
heating said core (10) to melt said braze layer, whereby melted braze material collects in said well and is drawn between said bead (28) and conical wall (32), thereby forming a continuous braze seam (36) when cooled.

2. A method according to claim 1, in which, said bead (28) is formed with a generally semi-spherical cross section and with a diameter (D1) larger than, but close to, the basic diameter (D) of said pipe (22), and in which,
said conical wall (32) is provided with a short cylindrical sleeve (34) comprising the smallest diameter of said conical wall (32) and substantially equal to said pipe basic diameter (D), so that, when said core (10) is inverted, said bead (28) forms a wedge shaped area of contact between the upper surface of said bead (28) and said conical wall (32) as well as forming a thin chamber (C) bounded by the underside of said bead (28), said conical wall (32), and said sleeve (34).

3. A method according to claims 1 or 2, in which, the surface of said pipe (22) is formed with a at least one short, discrete bump (30) extending above the surface of said pipe (22) and axially spaced (X) from said bead (28), and in which,
said conical wall (32) is provided with a total height (H) less than the axial spacing (X) of said bump (30) from said bead (28), so that, when said feed pipe (22) is inserted, said bump (30) passes through the smaller diameter (D) of said conical wall (32), thereby trapping the inner end of said pipe (22).
